# EUROPEAN PATENT SPECIFICATION

(11) **EP 1 403 153 B1**
(45) Date of publication and mention of the grant of the patent: **08.04.2009**
(21) Application number: 03103497.8
(22) Date of filing: 22.09.2003
(51) Int. Cl.: B60R 25/04

(54) **Anti-theft device in motorcycle**
Diebstahlsicherung für ein Fahrrad
Dispositif anti-vol pour motocyclette

(30) Priority: 26.09.2002 JP 2002281258
(43) Date of publication of application: 31.03.2004
(73) Proprietor: HONDA GIKEN KOGYO KABUSHIKI KAISHA, Minato-ku, Tokyo (JP)
(72) Inventor: Konno, Takeshi, 4-1, Chuo 1-chome, Wako-shi, Saitama (JP)
(74) Representative: Poulin, Gérard

(56) References cited:
- FR-A- 2 759 109
- FR-A- 2 802 871
- US-B1- 6 434 983

## Description

### [Technical Field of the Invention]

The present invention relates to an anti-theft device in a motorcycle, particularly relates to an anti-theft device in which the loss of a remove control can be prevented and an engine can be started promptly in a motorcycle of a type that the starting of the engine is allowed using the remote control.

### [Prior Art]

A vehicular anti-theft device in which the starting of an engine is allowed by receiving a control signal transmitted from the outside of a vehicle by a remote control on the side of the vehicle and discriminating the control signal is known.

In Japanese published utility model application No. 2558117, an anti-theft device in which an operation unit and a ten key pad are provided to a motorcycle or a three-wheeled vehicle, a card storing a body registration number and the password of an engine ignition switch and a lighting switch is inserted into the operation unit, next the password is input using the ten key pad and the starting of the engine is allowed only when the input password is coincident with the password stored in the card is disclosed.

As the starting of the engine is not allowed if the remote control is not used according to the anti-theft device adopting the remote control and the starting of the engine is not allowed until the card is used and further, the password is input according to the anti-theft device adopting the card, the theft of a vehicle can be prevented.

A prior art anti-theft system can be seen in document EP-A-654 383.

### [Problems to be Solved by the Invention]

However, only in the anti-theft device adopting the remote control, the remote control may be lost because of vibration in running. Besides, in a scooter-type motorcycle in which the locking of a seat is released by a remote control and a thing can be put or extracted in/from a housing box under the seat, a situation that the remote control is locked in the housing box and an engine cannot be started may occur.

Besides, in the anti-theft device disclosed in the Japanese published utility model application No. 2558117, as a user inserts a card into an operation unit when the user rides on a motorcycle and further, is required to input a password using a ten key pad, a burden is imposed on the user. Besides, there is also a problem that as it takes time to input the password, an engine cannot be started promptly.

The invention is made to solve the problems and the object is to provide an anti-theft device of a type that the starting of an engine is allowed using a remote control in a motorcycle in which the loss of the remote control and locking in a housing can be prevented and the engine can be started promptly.

### [Means to Solve the Problems]

To solve the problems, the invention is based upon an anti-theft device provided with a receiver that receives an unlocking signal from a remote control and a controller that judges whether ID included in the unlocking signal is coincident with ID registered beforehand or not on the side of a motorcycle in the motorcycle and is first characterized in that on the side of the motorcycle, further, a holder that holds the remote control anda detector that is provided inside theholder, detects that the remote control is inserted into the holder and outputs an insertion detection signal are provided and the controller permits the starting of an engine in case the controller judges that ID included in the unlocking signal is coincident with the registered ID and the insertion detection signal is input from the detector.

Besides, the invention is second characterized in that the holder has structure that enables the insertion and the extraction of the remote control.

Further, the invention is third characterized in that a cutout is provided to the remote control and a fitting part for fitting into the cutout is provided to the holder.

According to the first characteristic, the loss of the remote control and the confinement in the housing box can be prevented and the engine can be promptly started.

According to the second characteristic, the most of the remote control can be inserted into the holder and can be easily held.

According to the third characteristic, the remote control can be more firmly held and in a motorcycle the vibration in running of which is particularly large, the cutout and the fitting part are useful to hold the remote control.

### [Mode for carrying out the Invention]

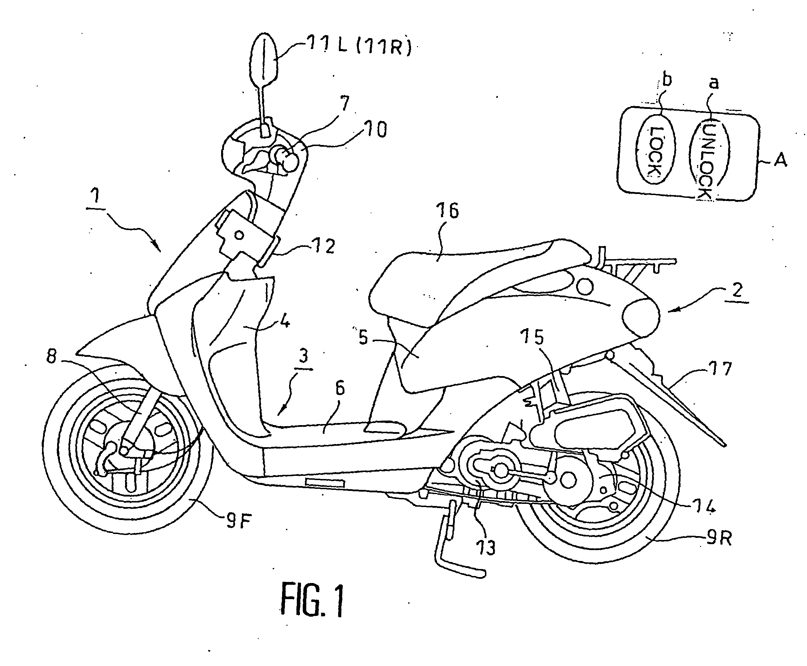

Referring to the drawings, preferred embodiments of the invention will be described in detail below. Fig. 1 is a side view showing the appearance of a scooter-type motorcycle to whichananti-theft device according to the invention is applied. However, a cover of a handlebar locking module is omitted. As shown in Fig. 1, the front 1 of the body and the rear 2 of the body are coupled via a low floor 3 and the skeleton of the parts is formed by a body frame substantially composed of a down tube and a main pipe.

The front 1 of the body, the rear 2 of the body and the floor 3 are covered with a front cover 4, a body cover 5 and a center cover 6. In the front 1 of the body, a handlebar 7 is provided above a steering head with the handlebar supported by the steering head, a front fork 8 is extended downward and a front wheel 9F is supported by its lower end. An upper part of the handlebar 7 is covered with a handlebar cover 10 that also functions as an instrument panel. The steering head, the front fork 8 and the handlebar 7 form steering means.

Grips of the handlebar 7 are protruded from the handlebar cover 10 in a lateral direction of the body and side mirrors 11L (11R) are protruded upward. In relation to the steering means, the handlebar locking module 12 for locking the handlebar 7 is provided. The handlebar locking module 12 will be described further in detail later.

A fuel tank and a housing box are provided with them supported by the main pipe inside the body cover 5. Besides, a single-cylinder four-cycle engine is mounted via a swing unit. A belt-type continuously variable transmission 13 is arranged at the back of the engine and a rear wheel 9R is supported by a speed reducing mechanism 14 provided at the back of the continuously variable transmission via a centrifugal clutch. A rear cushion 15 is inserted between the upper end of the speed reducing mechanism 14 and the main pipe.

A seat 16 is provided above the body cover 5 with the seat covering the housing box. The seat 16 can be lifted and the housing box below the seat can house a helmet and others. A number plate fixture 17, loading space and a tail lamp are provided to the rear of the body cover 5. An intake pipe, a carburetor and an air cleaner are also arranged in connection with the engine, however, they are not shown in Fig. 1.

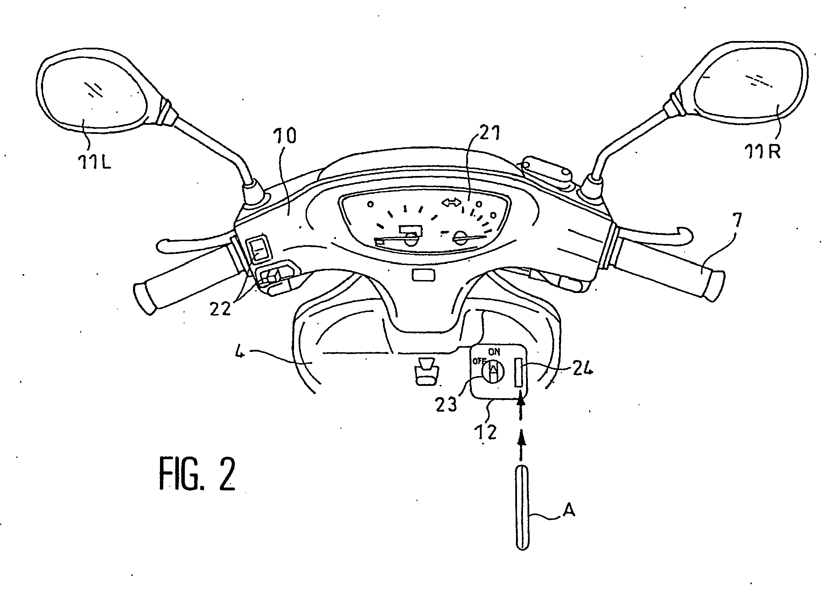

Fig. 2 is a front view showing the configuration of the vicinity of the handlebar cover 10 shown in Fig. 1 that also functions as the instrument panel. The instrument panel 21 including a speedometer and switches 22 for a light and a winker are arranged on the handlebar cover 10, the grips of the handlebar 10 are protruded in the lateral direction of the body and the side mirrors 11L, 11R are protruded upward.

The front panel of the handlebar locking module 12 is located outside an inner part of the front cover 4, and a main switch 23 and a remote control holder 24 are integrated here. The remote control holder 24 is configured so that a remote control (hereinafter called a remote control key) A is inserted and held. The remote control holder 24 is in a shape of a slit into/from which the remote control key A is inserted/extracted for example.

The remote control key A is provided with an unlocking button a and a locking button B as shown in Fig. 1 and includes an electronic circuit for transmitting a locking signal or an unlocking signal including specific ID in case each button is pressed and a battery.

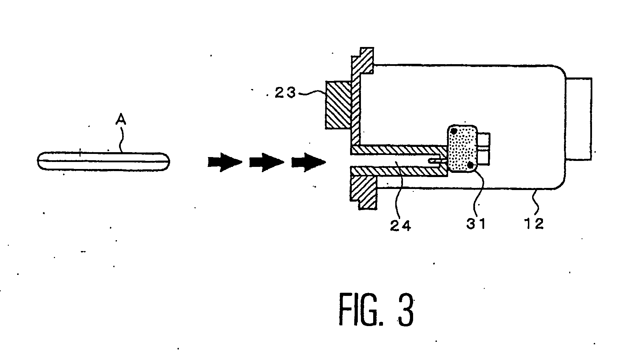

Fig. 3 is a block diagram showing one example of the handlebar locking module 12. The handlebar locking module 12 includes the remote control holder 24, a controller, a handlebar locking actuator and a handlebar locking mechanism, however, in Fig. 3, only the internal structure of the remote control holder 24 is shown.

At the front of the handlebar locking module 12, a main switch 23 and the remote control holder 24 are arranged and a remote control setting detection switch 31 for detecting that the remote control key A is inserted into the remote control holder 24 is provided inside the remote control holder 24.

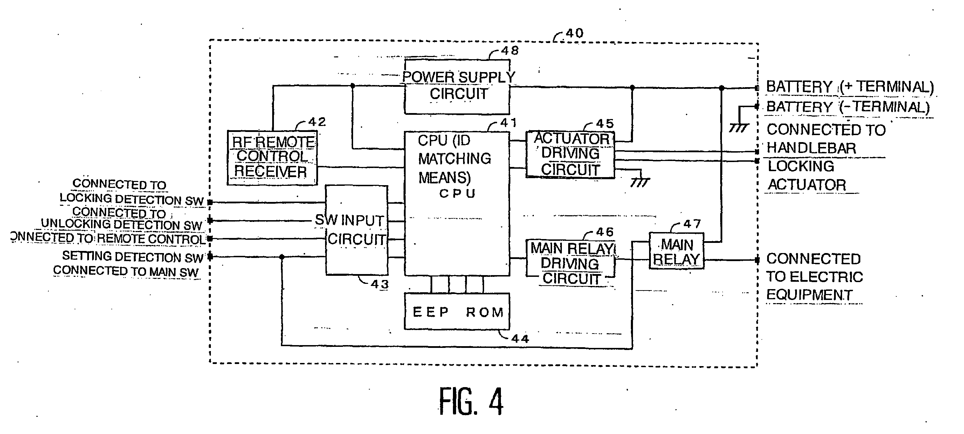

Fig. 4 is a block circuit diagram showing one example of the controller built in the handlebar locking module 12. The controller 40 includes CPU 41 as a control device, an RF remote control receiver 42 that receives a locking signal or an unlocking signal transmitted from the remote control key A, a switch input circuit 43 for inputting detection by a locking detection switch, an unlocking detection switch, a remote control setting detection switch 31 and the main switch 23 to CPU 41, storage means 44 such as EEPROM that stores registered ID, an actuator driving circuit 45, a main relay driving circuit 46, a main relay 47 and a power supply circuit 48 that supplies power from the battery to CPU 41 and the RF remote control receiver 42.

The actuator driving circuit 45 drives the handlebar locking actuator in case CPU 41 judges that ID included in an unlocking signal transmitted from the remote control key A is coincident with the registered ID and releases the locking of the handlebar. The main relay driving circuit 46 is operated in case CPU 41 judges that ID included in an unlocking signal transmitted from the remote control key A is coincident with the registered ID and detection by the remote control setting detection switch 31 is input. The main relay 47 is driven in case the main relay driving circuit 46 is operated and the main switch 23 is turned on, supplies power to electric equipment including an igniter and enables the starting of the engine.

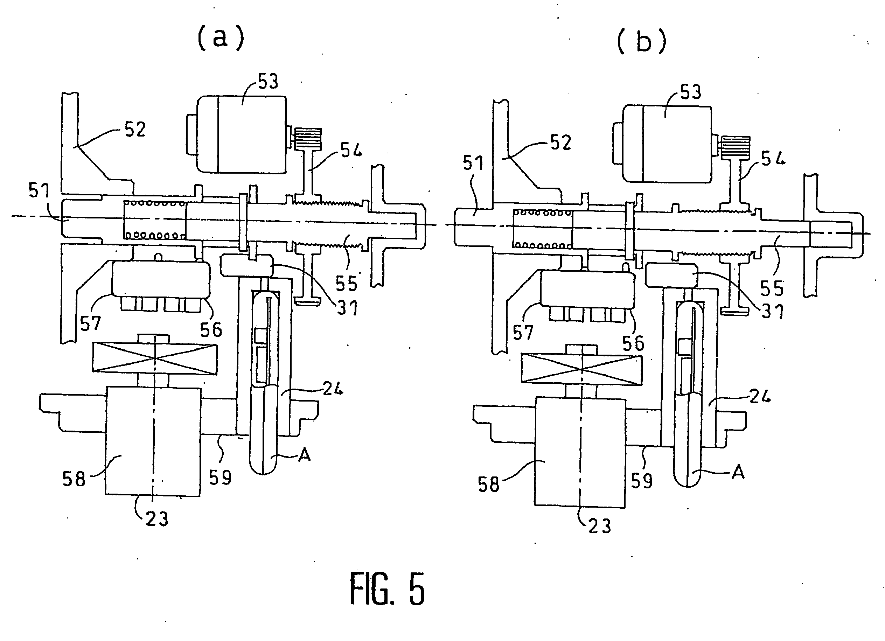

Figs. 5 are schematic diagrams showing one example of the handlebar locking actuator and a handlebar locking mechanism built in the handlebar locking module 12, Fig. 5A shows a state in which the locking of the handlebar is released and Fig. 5B shows a state in which the handlebar is locked. When the end of a lock pin 51 is not protruded from an attachment to a frame 52, it shows a handlebar locking released state (5A) and when the end of the lock pin is protruded, it shows a handlebar locked state (5B).

When a motor 53 as the handlebar locking actuator is rotated, the lock pin 51 is driven laterally in Figs. 5 via a ring gear 54 and an inner gear 55 respectively form the speed reducing mechanism. When the lock pin 51 is released, an unlocking detection switch 56 is operated by its protruded piece and in a locked state, a locking detection switch 57 is operated. Detection by these detection switches 56, 57 is input to CPU 41 shown in Fig. 4 to show that the handlebar is locked.

In Fig. 5, the main switch 23 operated with a knob 58 and the remote control holder 24 in a state in which the remote control key A is inserted and the remote control setting switch 31 is turned on are also shown and these are arranged on the front panel 59 of the handlebar locking module.

Next, the operation of the anti-theft device provided with the handlebar locking module 12 will be described. Suppose that the vehicle is stopped, the'handlebar 7 is locked by the protrusion of the lock pin 51, the main relay 47 is turned off and no power is supplied to the electric equipment such as the igniter. When in this state, a userpresses the unlocking button a of the remote control key A, an unlocking signal including specific ID is transmitted from the remote control key A.

The unlocking signal is received by the RF remote control receiver 42 and is input to CPU 41. CPU 41 matches ID included in the input unlocking signal and the registered ID stored in the storage means 44 beforehand, operates the actuator driving circuit 45 and drives the motor 53 in case CPU judges that both are coincident and makes the protruded lock pin 51 drawn back. Hereby, the locking of the handlebar is released and detection by the unlocking detection switch 56 is input to CPU 41 via the switch input circuit 43.

Next, when the user inserts the remote control key A into the remote control holder 24, the remote control setting detection switch 31 detects it and an insertion detection signal is input to CPU 41 via the switch input circuit 43. Hereby, the main relay driving circuit 46 is operated, when the main switch 23 is turned on in this state, the main relay 47 is driven, power is supplied to the electric equipment including the igniter and the starting of the engine is enabled.

While the vehicle is driven, the remote control key A is held in a state in which the remote control key is inserted into the remote control holder 24 and there is no fear that the remote control key A is lost. Besides, there is no fear that the remote control key is confined in the housing box. Further, as the starting of the engine is enabled immediately when the insertion of the remote control key A into the remote control holder 24 is detected by the remote control setting detection switch 31, it does not take much time to start the engine.

When the engine is stopped, first, the main switch 23 is turned off, the remote control key A is pulled out of the remote control holder 24 and the locking button b is pressed. When a locking signal is transmitted from the remote control key A and is received by the controller 40 of the handlebar locking module 12, the motor 53 is rotated in a reverse direction, the lock pin 51 is protruded, the vehicle becomes a state in which the handlebar is locked and locking is completed.

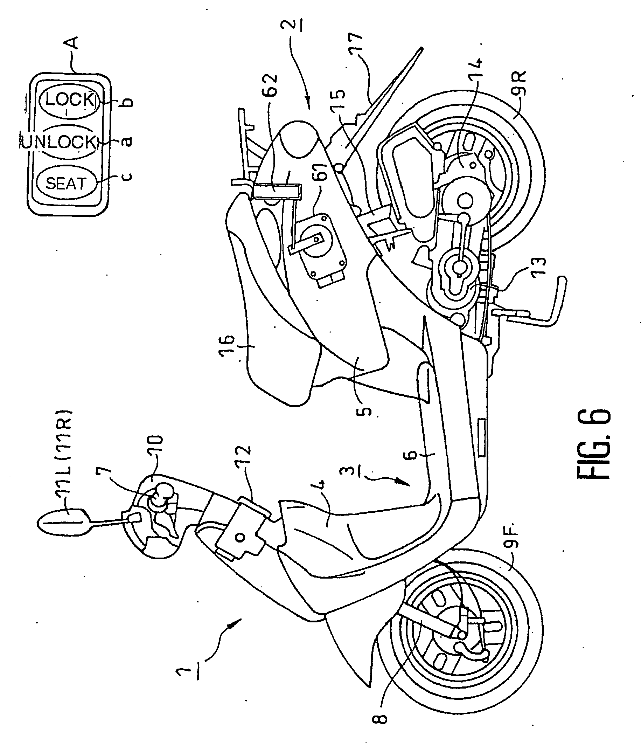

Fig. 6 is a side view showing the appearance of a scooter-type motorcycle in which a seat opening button c is further provided to a remote control key A, the locking of a seat 16 is released by pressing the button and a thing can be put/extracted in/from a housing box and the invention can be also applied to such a scooter-type motorcycle. The same reference number is allocated to the same part or the similar part as/to the part shown in Fig. 1.

Operation in case an unlocking button a and a locking button b of the remote control key A are pressed is similar to the operation in the above-mentioned embodiment. When the seat opening button c is pressed, a seat opening signal is transmitted from the remote control key A.

When this signal is receivedby a controller in a handlebar locking module 12 and ID included in the received signal is coincident with the registered ID, a seat actuator 61 is driven, the locking of the seat by a seat catcher 62 is released, the seat 16 can be lifted and a thing can be put/extracted in/from the housing box below the seat. As the remote control key A is held in the remote control holder 24 when the vehicle is driven, a frequency in which the remote control key is confined in the housing box is reduced.

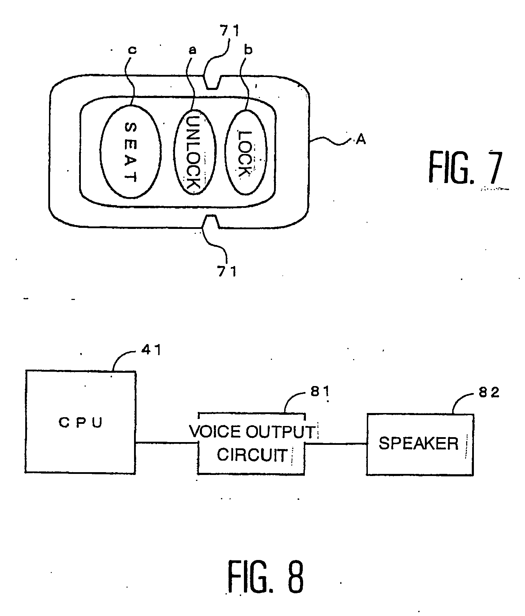

The embodiments of the invention have been described above, however, in the invention, various variations are allowed. Fig: 7 shows a transformed example in which a cutout 71 is provided to a remote control key A and a fitting part fitted into the cutout 71 is provided to a remote control holder 24 of a handlebar locking module 12, and according to the transformed example, the remote control keyA is more firmly held in the remote control holder 24. Fig. 7 shows the example in which the remote control key A is provided with a seat opening button c in addition to an unlocking button a and a locking button b.

Fig. 8 shows a transformed example in which a voice output circuit 81 and a speaker 82 are connected to CPU 41 and voice is output from the speaker 82 for fixed time after a remote control setting detection switch 31 is turned off, and according to this configuration, a user can be informed of the extraction of a remote control key A.

A remote control holder 24 can be provided to a suitable location of the body, however, if the remote control holder is integrated with a handlebar locking module 12 as in the above-mentioned embodiment, the increase of the cost and size can be miniaturized and the remote control holder can be mounted without a change of a mounted part on the side of the body or at the minimum change.

For the remote control setting detection switch 31, a contact type switch is shown, however, a magnetic switch such as a reed switch, Hall element and MR element, a capacitance type proximity switch and a proximity switch such as an optical (an infrared ray) sensor can be also used.

### [Effect of the Invention]

As clear from the above description, according to the invention, as the remote control is required to be inserted and held into/in the holder'to start the engine, the loss of the remote control and the confinement in the housing box can be prevented and in running, the remove control is never wrongly operated.

Besides, as the engine can be immediately started if the remote control is inserted into the holder after an unlocking signal is transmitted, the startability of the engine can be enhanced.

Further, the cutout is provided to the remote control, the remote control can be more firmly held in case the fitting part fitted into the cutout is provided to the holder and this configuration is useful to hold the remote control in a motorcycle the vibration in running of which is particularly large.

### [Brief Description of the Drawings]

[Fig. 1]
   Fig. 1 is a side view showing the appearance of a scooter- type motorcycle to which an anti-theft device according to the invention is applied;
[Fig. 2]
   Fig. 2 is a front view showing the configuration of the vicinity of a handlebar cover shown in Fig. 1;
[Fig. 3]
   Fig. 3 is a block diagram showing one example of a handlebar locking module;
[Fig. 4]
   Fig. 4 is a block circuit diagram showing one example of a controller;
[Fig. 5]
   Figs. 5 are schematic diagrams showing one example of a handlebar locking mechanism and a handlebar locking actuator;
[Fig. 6]
   Fig. 6 is a side view showing the appearance of another scooter-type motorcycle to which the invention can be applied;
[Fig. 7]
   Fig. 7 shows a transformed example of a remote control key; and
[Fig. 8]
   Fig. 8 is a block diagram showing a transformed example in which the extraction of a remote control key is informed.

## Claims

1. An antitheft device of a motorcycle **characterized in that** it comprise:
- a handlebar locking mechanism actuated by a motor (53), said handlebar locking mechanism being displaceable from a released state to a locked state, and inversely;
- a remote control (A) for transmitting an unlocking signal to a receiver (42);
- a controller (40) including said receiver (42) and judging whether ID included in said unlocking signal is coincident with ID registered beforehand or not on the side of the motorcycle, said handlebar locking mechanism being displaced from its locked state to its released state when ID included in said unlocking signal is coincident with the registered ID;
- a holder (24) holding said remote control (A) and being in the form of a slit into/from which said remote control (A) is inserted/extracted;
- a detector (31) that is provided inside the holder (24), detects that the remote control (A) is inserted into the holder (24) and outputs an insertion detection signal; and
- a main switch (23) operated with a knob (58),
said controller (40) permitting the starting of an engine, when said main switch (23) is operated, in case the controller (40) judges whether ID included in said unlocking signal is coincident with the registered ID and receives the insertion detection signal from the detector (31),
and **in that** said handlebar locking mechanism, said motor (53), said controller (40), said holder (24) and said main switch (23) being integrated in a same handlebar locking module (12).

2. An antitheft device according to claim 1, **characterized in that** said remote control (A) is provided with an unlocking button (a) and a locking button (b), and includes an electronic circuit for transmitting said unlocking signal when button (a) is pressed and for transmitting a locking signal when button (b) is pressed, said handlebar locking mechanism being displaced from its released state to its locked state when said locking signal is received by the controller (40).

3. An antitheft device according to claim 2, **characterized in that** said remote control (A) is further provided with a seat opening button (c), the locking of a seat (16) being released when button (c) is pressed.

4. An antitheft device according to anyone of the preceding claims, **characterized in that** a cutout (71) is provided to the remote control (A), and a fitting part fitted into the cutout (71) is provided to the holder (24).

5. Motorcycle including an anti-theft device according to anyone of the preceding claims.

6. Motorcycle according to claim 5, wherein said motorcycle includes a body having a front (1) covered by a front cover (4), and wherein the front panel of said handlebar locking module (12) is located outside an inner part of the front cover (4), said front panel integrating said main switch (23) and said remote control holder (24).

## Patentansprüche

1. Antidiebstahlvorrichtung für ein Motorrad, **dadurch gekennzeichnet, dass** sie umfaßt:
- einen Lenkstangen-Verriegelungsmechanismus, der durch einen Motor (53) betätigt wird, wobei der Lenkstangen-Verriegelungsmechanismus von einem gelösten Zustand in einen verriegelten Zustand und umgekehrt verstellbar ist;
- eine Fernsteuerung (A) zur Übertragung eines Entriegelungssignals an einen Empfänger (42);
- einen Controller (40), der den Empfänger (42) enthält und beurteilt, ob oder ob nicht eine in dem Entriegelungssignal enthaltene ID mit einer ID übereinstimmt, die zuvor auf der Seite des Motorrads registriert worden ist, wobei der Lenkstangen-Verriegelungsmechanismus von seinem verriegelten Zustand in seinen gelösten Zustand verstellt wird, wenn die in dem Entriegelungssignal enthaltene ID mit der registrierten ID übereinstimmt;
- einen Halter (24), der die Fernsteuerung (A) hält und die Form eines Schlitzes halt, in den/aus dem die Fernsteuerung (A) eingesetzt/entnommen wird;
- einen Detektor (31), der innerhalb des Halters (24) vorgesehen ist, der detektiert, dass die Fernsteuerung (A) in den Halter (24) eingesetzt ist, und der ein Einsetz-Detektionssignal ausgibt; und
- einen Hauptschalter (23), der mittels eines Knopfes (58) betätigt wird,
wobei der Controller (40) das Starten einer Kraftmaschine erlaubt, wenn der Hauptschalter (23) betätigt wird, wenn der Controller (40) beurteilt, ob die in dem Entriegelungssignal enthaltene ID mit der registrierten ID übereinstimmt und das Einsetz-Detektionssignal von dem Detektor (31) empfängt,
und dass der Lenkstangen-Verriegelungsmechanismus, der Motor (53), der Controller (40), der Halter (24) und der Hauptschalter (23) in ein und demselben Lenkstangen-Verriegelungsmodul (12) integriert sind.

2. Antidiebstahlvorrichtung nach Anspruch 1, **dadurch gekennzeichnet, dass** die Fernsteuerung (A) mit einem Entriegelungsknopf (a) und einem Verriegelungsknopf (b) versehen ist und eine elektronische Schaltung enthält, um das Entriegelungssignal zu übertragen, wenn der Knopf (a) gedrückt wird, und um ein Verriegelungssignal zu übertragen, wenn der Knopf (b) gedrückt wird, wobei der Lenkstangen-Verriegelungsmechanismus von seinem gelösten Zustand in seinen verriegelten Zustand verstellt wird, wenn das Verriegelungssignal von dem Controller (40) empfangen wird.

3. Antidiebstahlvorrichtung nach Anspruch 2, **dadurch gekennzeichnet, dass** die Fernsteuerung (A) ferner mit einem Sitzöffnungsknopf (c) versehen ist, wobei die Verriegelung eines Sitzes (16) gelöst wird, wenn der Knopf (c) gedrückt wird.

4. Antidiebstahlvorrichtung nach einem der vorhergehenden Ansprüche, **dadurch gekennzeichnet, dass** eine Ausschneidung (71) an der Fernsteuerung (A) vorgesehen ist, und dass an dem Halter (24) ein Passstück vorgesehen ist, das in die Ausschneidung (71) eingepaßt wird.

5. Motorrad, umfassend eine Antidiebstahlvorrichtung nach einem der vorhergehenden Ansprüche.

6. Motorrad nach Anspruch 5, wobei das Motorrad einen Körper mit einer Front (1) umfaßt, die durch eine Frontabdeckung (4) abgedeckt ist, und wobei die Frontplatte des Lenkstangen-Verriegelungsmoduls (12) außerhalb eines inneren Teils der Frontabdeckung (4) angeordnet ist, wobei die Frontplatte den Hauptschalter (23) und den Fernsteuerungshalter (24) integriert.

## Revendications

1. Dispositif antivol pour une moto, **caractérisé en ce qu'**il comprend :
- un mécanisme de blocage de guidon actionné par un moteur (53), ledit mécanisme de blocage de guidon étant déplaçable d'un état débloqué à un état bloqué, et inversement ;
- une commande à distance (A) pour transmettre un signal de déblocage à un récepteur (42) ;
- un contrôleur (40) comprenant ledit récepteur (42) et jugeant si l'ID inclus dans ledit signal de déblocage coïncide avec l'ID enregistré au préalable ou pas sur le côté de la moto, ledit mécanisme de blocage de guidon étant déplacé de son état bloqué à son état débloqué lorsque l'ID inclus dans ledit signal de déblocage coïncide avec l'ID enregistré ;
- un support (24) maintenant ladite commande à distance (A) et se présentant sous la forme d'une fente dans / à partir de laquelle ladite commande à distance (A) est insérée / extraite ;
- un détecteur (31) qui est prévu à l'intérieur du support (24), détecte que la commande à distance (A) est insérée dans le support (24) et produit un signal de détection d'insertion ; et
- un commutateur principal (23) actionné avec un bouton (58),
ledit contrôleur (40) permettant le démarrage d'un moteur, lorsque ledit commutateur principal (23) est actionné, dans le cas où le contrôleur (40) juge que l'ID inclus dans ledit signal de déblocage coïncide avec l'ID enregistré et reçoit le signal de détection d'insertion du détecteur (31),
et **en ce que** ledit mécanisme de blocage de guidon, ledit moteur (53), ledit contrôleur (40), ledit support (24) et ledit commutateur principal (23) sont intégrés dans un même module de blocage de guidon (12).

2. Dispositif antivol selon la revendication 1, **caractérisé en ce que** ladite commande à distance (A) est prévue avec un bouton de déblocage (a) et un bouton de blocage (b), et comprend un circuit électronique pour transmettre ledit signal de déblocage lorsque le bouton (a) est enfoncé et pour transmettre un signal de blocage lorsque le bouton (b) est enfoncé, ledit mécanisme de blocage de guidon étant déplacé de son état débloqué à son état bloqué lorsque ledit signal de blocage est reçu par le contrôleur (40).

3. Dispositif antivol selon la revendication 2, **caractérisé en ce que** ladite commande à distance (A) est en outre prévue avec un bouton d'ouverture de siège (c), le blocage d'un siège (16) étant débloqué lorsque le bouton (c) est enfoncé.

4. Dispositif antivol selon l'une quelconque des revendications précédentes, **caractérisé en ce qu'**une découpe (71) est prévue sur la commande à distance (A), et une partie de montage installée dans la découpe (71) est prévue sur le support (24).

5. Moto comprenant un dispositif antivol selon l'une quelconque des revendications précédentes.

6. Moto selon la revendication 5, dans laquelle ladite moto comprend un corps ayant une partie avant (1) recouverte par un couvercle avant (4), et dans laquelle le panneau avant dudit module de blocage de guidon (12) est situé à l'extérieur d'une partie interne du couvercle avant (4), ledit panneau avant intégrant ledit commutateur principal (23) et ledit support de commande à distance (24).
